## Europäisches Patentamt

## European Patent Office

## Office européen des brevets

(19)

(11) Veröffentlichungsnummer: **0 038 934**
**B1**

(12) **EUROPÄISCHE PATENTSCHRIFT**

(45) Veröffentlichungstag der Patentschrift:
16.05.84

(51) Int. Cl.³: **H 02 B 1/04,** H 02 G 3/10

(21) Anmeldenummer: **81102265.6**

(22) Anmeldetag: **26.03.81**

(54) **Installationsverteiler.**

(30) Priorität: **25.04.80 DE 3015945**

(43) Veröffentlichungstag der Anmeldung:
**04.11.81 Patentblatt 81/44**

(45) Bekanntmachung des Hinweises auf die Patenterteilung:
**16.05.84 Patentblatt 84/20**

(84) Benannte Vertragsstaaten:
**AT BE CH FR GB IT LI NL**

(56) Entgegenhaltungen:
**DE - A - 2 515 054**
**DE - A - 2 720 381**
**DE - B - 1 052 662**
**FR - A - 1 443 292**
**FR - A - 2 183 541**
**US - A - 2 990 570**
**US - A - 3 869 753**
**US - A - 3 931 663**

(73) Patentinhaber: **BROWN, BOVERI & CIE**
**Aktiengesellschaft Mannheim, Kallstadter Strasse 1,**
**D-6800 Mannheim Käfertal (DE)**

(72) Erfinder: **Leger, Friedrich, Dipl.-Ing.,**
**Adolf-Eiermann-Strasse 13, D-6930 Eberbach (DE)**

(74) Vertreter: **Kempe, Wolfgang, Dr. et al, c/o BROWN,**
**BOVERI & CIE AG Kallstadter Strasse 1,**
**D-6800 Mannheim-Käfertal (DE)**

Installationsverteiler

Die Erfindung bezieht sich auf einen Installationsverteiler für Wandaufbau (Aufputzmontage), vorzugsweise zur Verwendung für die elektrische Hausinstallation, mit einer haubenartigen Berührungsschutzabdeckung (Abdeckhaube), durch die die abgedeckten Installationsgeräte herausragen.

Bekannte Kleinverteiler dieser Ausführungsart bestehen z. B. aus einem Schrank mit Rahmen, mit oder ohne Rückwand und Tür, der einen Geräteträger und eine Berührungsschutzabdeckung enthält. Andere Ausführungen werden durch Einbau eines kompletten offenen Aufputz-Verteilers in einen darauf abgestimmten Leerschrank gebildet. Schließlich sind Aufputz-Schrankverteiler bekannt, die prinzipiell wie ein Unterputz-Schrankverteiler aufgebaut sind, wobei lediglich der sogenannte Mauerkasten durch einen Wandbefestigungskasten ersetzt ist.

Alle diese Lösungen sind relativ aufwendig und erfordern eine getrennte Fertigung und Lagerhaltung. Sie haben generell den Nachteil, daß es nicht möglich ist, einen offenen Verteiler nachträglich, d. h. nach erfolgtem Anschluß, noch mit einer Tür zu versehen und so in einen Schrankverteiler zu verwandeln. Der Kunde muß sich also bereits bei der Bestellung entscheiden, ob ein offener oder ein Schrankverteiler installiert werden soll.

Aufgabe der Erfindung ist es daher, einen offenen Installationsverteiler zu schaffen, bei dem die herausragenden Teile der Installationsgeräte durch einfache Mittel auch nach erfolgter Montage des Installationsverteilers abgedeckt werden können.

Diese Aufgabe wird erfindungsgemäß dadurch gelöst, daß an der Abdeckhaube Mittel vorgesehen sind, durch die eine Tür und/oder je Gerätereihe wenigstens ein Klappdeckel zum Abdecken der herausragenden Teile der Installationsgeräte befestigbar ist bzw. sind.

Durch diese Lösung kann ein offener Aufputz-Kleinverteiler, der eine haubenartige Berührungsschutzabdeckung besitzt, bei Bedarf auch nachträglich in einen Schrankverteiler umgerüstet werden. Es ergibt sich der Vorteil, daß anstelle kompletter Aufputz-Schrankverteiler nur die nachrüstbare Tür bzw. der Klappdeckel quasi als Zubehörteil am Lager gehalten werden müssen.

Eine besonders einfache und wirkungsvolle Lösung ergibt sich dadurch, daß als Mittel zur Montage der Tür bzw. des wenigstens einen Klappdeckels an der Abdeckhaube ausbrechbare Vormarkierungen vorgesehen sind, in welche nach Ausbrechen Türscharnierteile bzw. Klappdeckelscharniere einsetzbar sind.

Es lassen sich auch vorteilhaft an der Abdeckhaube Scharnierhalterungen oder Scharnierteile anformen oder befestigen, an welche die Türscharnierteile bzw. Klappdeckelscharniere aufgeschnappt, angeschraubt oder sonstwie befestigt werden.

Die Tür ist allseitig abgekantet und aus optischen Gründen in ihren Umfangsabmessungen kleiner gehalten als die zugehörige Abdeckhaube, d. h. gegen diese etwas abgesetzt. Sie ist mit Scharnieren und einem Rastelement mit Griffteil versehen, das bei Bedarf gegen ein Sicherheitsschloß ausgewechselt werden kann. Die Scharniere der Tür bzw. der Klappdeckel können entweder schraubenlos in der Abdeckhaube eingerastet oder durch Schraubenverbindungen mit der Abdeckhaube verbunden werden. Die Scharniere bestehen aus zwei gegeneinander schwenkbaren Teilen, wobei ein Teil (bei Stahlblechtüren) aus Metall besteht und fest mit der Tür verbunden ist, und im Fall der einrastbaren Lösung das andere Teil aus Kunststoff gefertigt und mit Rastnasen zum Einschnappen in Öffnungen versehen ist, die an vormarkierten Stellen der Abdeckhaube durch Ausbrechen hergestellt wurden. Das Ausbrechen der Öffnungen erfolgt erst bei Bedarf. Dasselbe gilt für das Ausbrechen der Öffnungen, die zur Aufnahme bzw. Verrastung der Verschlußeinrichtung der Tür bzw. der Klappdeckel dienen.

In vorteilhafter Weise kann der Klappdeckel im Bereich der Scharniere mit Rastnocken versehen sein, welche einerseits den geöffneten Klappdeckel sebständig offenhalten bzw. andererseits den geschlossenen Klappdeckel zuhalten und ein zusätzliches Schließelement überflüssig machen. Die Abdeckhaube ist meist aus Kunststoff, der Klappdeckel vorzugsweise aus transparentem Kunststoff gefertigt. Die Tür kann aus Stahlblech oder Kunststoff bestehen.

Weitere vorteilhafte Ausgestaltungen und Verbesserungen der Erfindung ergeben sich aus den Unteransprüchen.

Anhand der Zeichnung, in der zwei Ausführungsbeispiele der Erfindung gezeigt sind, soll die Erfindung erläutert und beschrieben werden. Es zeigt

Fig. 1 die Explosionsdarstellung eines Installationsverteilers mit aufschnappbarer Tür und

Fig. 2 die Abdeckhaube eines Installationsverteilers mit zwei Klappdeckeln.

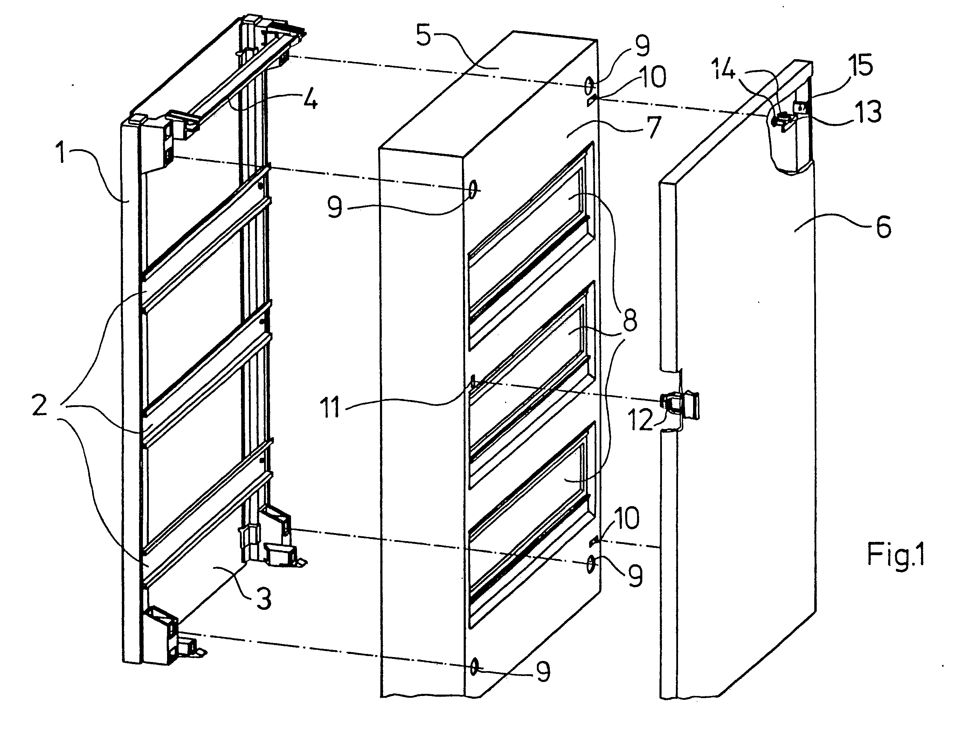

Die Fig. 1 zeigt als Ausführungsbeispiel der Erfindung einen unbestückten dreireihigen Aufputz-Installationsverteiler mit Tür 6 in einer Explosionsdarstellung. Der Installationsverteiler besteht aus dem Geräteträger 1 mit den Gerätetragschienen 2, der Rückwand 3 und der Schutzleiter- bzw. Neutralleiterklemmleiste 4, der Berührungsschutzabdeckhaube 5 und der Tür 6. Die Berührungsschutzabdeckhaube 5 besitzt in ihrer Frontfläche 7 Geräteausschnitte 8, Befestigungsschraubenlöcher 9, Einrastöffnungen 10 für die Scharniere der Tür 6 und eine Öffnung 11 für das Schließelement 12 der Tür 6. An der Tür 6 ist ein Scharnier sichtbar, das aus zwei Teilen besteht. Ein Scharnierteil 15 ist an der Tür befestigt, das andere Türscharnierteil 13, das schwenkbar mit dem Scharnierteil 15 verbunden ist, enthält zwei Rastnasen 14, die in die Öffnungen 10 der Berührungsschutzabdeckhaube 5 einrastbar sind. Die Tür 6 enthält ferner ein Schließelement 12, welches in die Öffnung 11 der Berührungsschutzabdeckhaube 5 einrastbar ist und die Tür 6 verschlossen hält, so daß diese nur mit einem gewissen Kraftaufwand geöffnet werden kann.

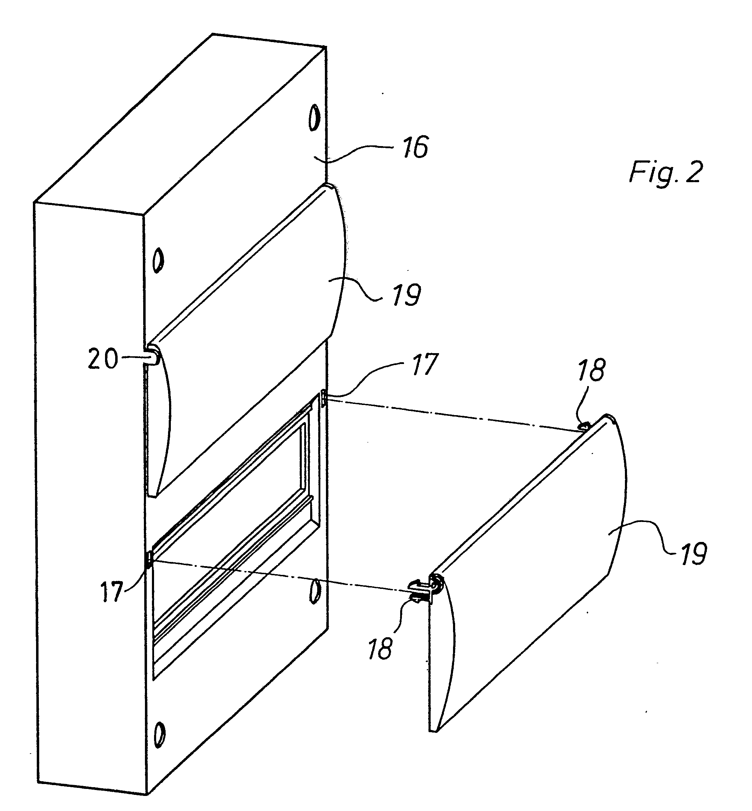

Die Fig. 2 zeigt die Berührungsschutzabdeckhaube 16 eines zweireihigen Installationsverteilers mit zwei Klappdeckeln 19. Der obere Klappdeckel 19 ist in montiertem, geschlossenem Zustand dargestellt. Er ist mittels zweier drehbarer Gelenke, von denen nur eines sichtbar ist, an der Berührungsschutzabdeckhaube 16 befestigt. Jedes der Gelenke besteht aus einer an der Seitenfläche der Berührungsschutzabdeckhaube 16 angeformten, zur Frontseite vorstehenden Lasche 20, die zur Klappdeckelseite eine nicht dargestellte verrundete Nase aufweist, welche in eine korrespondierende, nicht dargestellte Ausnehmung an der Klappdeckelschmalseite eingerastet ist.

Der untere Klappdeckel 19 weist eine andere erfindungsgemäße Befestigungsmöglichkeit als der obere Klappdeckel 19 auf. Er ist in nicht montiertem Zustand dargestellt. Er trägt zwei Klappdeckelscharniere 18, die in die Öffnungen 17 auf der Frontfläche der Berührungsschutzabdeckhaube 16 einrastbar sind.

Die beiden Klappdeckel 19 werden durch die Gelenke bzw. die Klappdeckelscharniere 18 so gehalten, daß sie durch ihr Eigengewicht die aus der Berührungsschutzabdeckhaube 16 herausragenden Teile der nicht dargestellten Installationsgeräte, wie Installationsselbstschalter und dergl. abdecken.

**Patentansprüche**

1. Installationsverteiler für Wandaufbau (Aufputzmontage), vorzugsweise zur Verwendung für die elektrische Hausinstallation, mit einer haubenartigen Berührungsschutzabdeckung (Abdeckhaube), durch die die abgedeckten Installationsgeräte herausragen, dadurch gekennzeichnet, daß an der Abdeckhaube (5; 16) Mittel vorgesehen sind, durch die eine Tür (6) und/oder je Gerätereihe wenigstens ein Klappdeckel (19) zum Abdecken der herausragenden Teile der Installationsgeräte befestigbar ist bzw. sind.

2. Installationsverteiler nach Anspruch 1, dadurch gekennzeichnet, daß als Mittel zur Befestigung der Tür (6) bzw. des wenigstens einen Klappdeckels (19) an der Abdeckhaube (5; 16) ausbrechbare Vormarkierungen vorgesehen sind, in welche nach Ausbrechen Türscharnierteile (13) bzw. Klappdeckelscharniere (18) einsetzbar sind.

3. Installationsverteiler nach Anspruch 2, dadurch gekennzeichnet, daß die Türscharnierteile (13) bzw. Klappdeckelscharniere (18) in die Öffnungen (10, 17) einrastbar sind.

4. Installationsverteiler nach Anspruch 2, dadurch gekennzeichnet, daß jedes Türscharnier bzw. Klappdeckelscharnier (18) aus zwei gegeneinander verschwenkbaren Teilen besteht, wobei das eine Teil fest mit der Tür (6) bzw. dem wenigstens einen Klappdeckel (19) und das andere Teil beispielsweise mittels Schraubenverbindungen fest mit der Abdeckhaube (5; 16) verbunden ist.

5. Installationsverteiler nach einem der Ansprüche 1 bis 4, dadurch gekennzeichnet, daß ausbrechbare Vormarkierungen (11) vorgesehen sind, in die ein Schließelement (12) der Tür (6) bzw. des wenigstens einen Klappdeckels (19) nach Ausbrechen einsetzbar oder einrastbar ist.

6. Installationsverteiler nach einem der Ansprüche 1 bis 5, dadurch gekennzeichnet, daß die Umfangsabmessungen der Tür (6) um ein gewisses Maß kleiner sind als die Umfangsabmessungen der Abdeckhauben (5; 16).

7. Installationsverteiler nach einem der Ansprüche 2 bis 3 und 5 bis 6, dadurch gekennzeichnet, daß das Scharnier einer Tür (6) aus Stahlblech aus einem Metallteil, welches mit der Tür (6) fest verbunden ist, und einem Kunststoffteil besteht, welche beide gegeneinander verschwenkbar sind, und daß am Kunststoffteil federnde Rastnasen (14) zum Einschnappen in die Abdeckhaube (5) vorgesehen sind.

8. Installationsverteiler nach einem der Ansprüche 5 bis 7, dadurch gekennzeichnet, daß an der Tür (6) bzw. dem wenigstens einen Klappdeckel (19) ein einrastbares Schließelement (12) vorgesehen ist, welches zum Zuhalten der Tür (6) bzw. der Klappdeckel (9) in eine ausbrechbare Öffnung der Abdeckhaube (5; 16) eindrückbar ist.

9. Installationsverteiler nach Anspruch 8, dadurch gekennzeichnet, daß das Schließelement (12) der Tür (6) bzw. des wenigstens einen Klappdeckels (19) ein abschließbares Schloß ist.

10. Installationsverteiler nach einem der Ansprüche 1 bis 9, dadurch gekennzeichnet, daß der Klappdeckel (19) eine Rasteinrichtung, z. B. Rastnocken an den Klappdeckelscharnieren (19), zum selbständigen Offenhalten des Klappdeckels (19) aufweist.

11. Installationsverteiler nach einem der Ansprüche 1 bis 10, dadurch gekennzeichnet, daß die Klappdeckel (19) eine Rasteinrichtung, z. B. Rastnocken an den Klappdeckelscharnieren (18) zum Zuhalten des Klappdeckels (19) aufweisen.

12. Installationsverteiler nach einem der Ansprüche 1 bis 11, dadurch gekennzeichnet, daß als Mittel zur Montage der Tür (6) bzw. des wenigstens einen Klappdeckels (19) an der Abdeckhaube (5; 16) angeformte oder befestigte Scharnierhalterungen bzw. Scharnierteile vorgesehen sind, an welchen die Türscharnierteile bzw. Klappdeckelscharniere befestigbar sind.

**Claims**

1. Wiring distributor for wall mounting (surface mounting), preferably to be used for electric wiring in houses, having a hood-like contact safety cover (covering hood) through which the covered wiring appliances project outwards, characterized in that there are provided on the covering hood (5; 16) means via which a door (6) and/or at least one hinged cover (19) per series of appliances can be secured for covering the projecting parts of the wiring appliances.

2. Wiring distributor as claimed in claim 1, characterized in that there are provided as means for securing the door (6) and/or the hinged cover (19) — of which there is at least one — on the covering hood (5, 16) markings which can be broken out and in which, after breaking out, door hinge parts (13) and/or hinged cover hinges (18) can be inserted.

3. Wiring distributor as claimes in claim 2, characterized in that the door hinge parts (13) and/or hinged cover hinges (18) can engage in the openings (10, 17).

4. Wiring distributor as claimed in claim 2, characterized in that each door hinge and/or hinged cover hinge (18) consists of two parts which can be pivoted towards one another, one part being rigidly connected to the door (6) and/or the hinged cover (19) — of which there is at least one — and the other part being rigidly connected to the covering hood (5, 16), for example by means of screw connections.

5. Wiring distributor as claimed in one of claims 1 to 4, characterized in that markings (11), which can be broken out, are provided, in which a closing element (12) of the door (6) and/or of the hinged cover (19) — of which there is at least one — can be inserted or engaged after breaking out.

6. Wiring distributor as claimed in one of claims 1 to 5, characterized in that the peripheral dimensions of the door (6) are smaller by a certain extent than the peripheral dimensions of the covering hood (5; 16).

7. Wiring distributor as claimed in one of claims 2 to 3 and 5 to 6, characterized in that the hinge of one sheet steel door (6) consists of a metal part, which is rigidly connected to the door (6), and a plastics part, which two parts can be pivoted towards each other, and in that resilient engagement projections (14) are provided on the plastics part in order to snap into the covering hood (5).

8. Wiring distributor as claimed in one of claims 5 to 7, characterized in that there is provided on the door (6) and/or the hinged cover (19) — of which there is at least one — an engageable closing element (12) which can be pressed into an opening, of the covering hood (5; 16), which can be obtained by breaking out, for keeping the door (6) and/or the hinged cover (19) closed.

9. Wiring distributor as claimed in claim 8, characterized in that the closing element (12) of the door (6) and/or the hinged cover (19) — of which there is at least one — is a lockable lock.

10. Wiring distributor as claimed in one of claims 1 to 9, characterized in that the hinged cover (19) comprises a detent device, e. g. detent cams, on the hinged cover hinges (18) for keeping the hinged cover (19) open independently.

11. Wiring distributor as claimed in one of claims 1 to 10, characterized in that the hinged covers (19) comprise a detent device, e. g. detent cams, on the hinged cover hinges (18) for keeping the hinged cover (19) closed.

12. Wiring distributor as claimed in one of claims 1 to 11, characterized in that there are provided as means for assembling the door (6) and/or the hinged cover (19) — of which there is at least one — hinge holding devices or hinge parts which are secured or integrally formed on the covering hood (5; 16), on which holding devices or parts the door hinge parts and/or hinged cover hinges can be secured.

## Revendications

1. Distributeur d'installation destiné à un montage sur paroi (montage en saillie) de préférence à utiliser pour l'installation domestique électrique, comportant un couvercle de protection contre les contacts du type capot (capot de couverture), à travers lequel dépassent les éléments de l'installation recouverts, caractérisé en ce que sur le capot de couverture (5; 16) on prévoit des moyens grâce auxquels on peut fixer une porte (6) et/ou au moins un couvercle rabattable (19) par série d'éléments pour recouvrir les pièces en saillie des éléments de l'installation.

2. Distributeur d'installation selon la revendication 1, caractérisé en ce qu'on prévoit, comme moyen pour fixer la porte (6) ou au moins un couvercle rabattable (19) sur le capot de recouvrement (5; 16), des repères préliminaires détachables dans lesquels on peut insérer après détachement des pièces (13) de charnières de portes ou des charnières (18) de couvercle rabattable.

3. Distributeur d'installation selon la revendication 2, caractérisé en ce que les pièces (13) de charnières de portes ou les charnières (18) de couvercle rabattable peuvent être verrouillées dans les orifices (10, 17).

4. Distributeur d'installation selon la revendication 2, caractérisé en ce que chaque charnière de porte ou charnière de couvercle rabattable (18) est constituée par deux pièces pouvant pivoter l'une par rapport à l'autre, l'une des pièces étant reliée fixement à la porte (6) ou à au moins l'un des couvercles rabattables (19) et l'autre pièce, par exemple au moyen de liaisons par vis, pouvant être reliée fixement au capot de recouvrement (5; 16).

5. Distributeur d'installation selon l'une des revendications 1 à 4, caractérisé en ce qu'on prévoit des marquages préliminaires (11) détachables dans lesquels on peut introduire ou verrouiller un élément de fermeture (12) de la porte (6) ou d'au moins un couvercle rabattable (19) après détachement.

6. Distributeur d'installation selon l'une des revendications 1 à 5, caractérisé en ce que les dimensions périphériques de la porte (6) sont plus petites d'une certaine mesure que les dimensions périphériques des capots de recouvrement (5; 16).

7. Distributeur d'installation selon l'une des revendications 2 et 3 et 5 et 6, caractérisé en ce que la charnière d'une porte (6) est faite d'une tôle en acier comme partie métallique qui est reliée fixement à la porte (6) et d'une partie en matière plastique, les deux parties pouvant pivoter l'une par rapport à l'autre et en ce que sur la partie en matière plastique, on prévoit des languettes élastiques de verrouillage (14) pour obtenir un enclenchement dans le capot de couverture (5).

8. Distributeur d'installation selon l'une des revendications 5 à 7, caractérisé en ce que sur la porte (6) ou sur au moins l'un des couvercles rabattables (19) on prévoit un élément de fermeture (12) enclenchable qu'on peut enfoncer pour maintenir la porte (6) ou le couvercle rabattable (9) dans un orifice arrachable du capot de recouvrement (5; 16).

9. Distributeur d'installation selon la revendication 8, caractérisé en ce que l'élement de fermeture (12) de la porte (6) ou d'au moins l'un des couvercles rabattables (19) est une serrure verrouillable.

10. Distributeur d'installation selon l'une des revendications 1 à 9, caractérisé en ce que le couvercle rabattable (19) présente un dispositif de verrouillage, par exemple des languettes de verrouillage sur les charnières (18) de couvercle rabattable, pour maintenir automatiquement ouvert le couvercle rabattable (19).

11. Distributeur d'installation selon l'une des revendications 1 à 10, caractérisé en ce que le couvercle rabattable (19) présente un dispositif de verrouillage, par exemple des languettes de verrouillage sur les charnières (18) de couvercle rabattable pour maintenir le couvercle rabattable (19).

12. Distributeur d'installation selon l'une des revendications 1 à 11, caractérisé en ce qu'on prévoit comme moyen pour le montage de la porte (6) ou d'au moins un des couvercles rabattables (19) des supports de charnière ou des pièces de charnière fixés ou formés sur le capot de recouvrement (5; 16) et sur lesquels sont fixées les charnières de portes ou les charnières de couvercle rabattable.

Fig.1

0 038 934

*Fig. 2*